# EUROPÄISCHE PATENTSCHRIFT

(11) **EP 2 679 463 B1**
(45) Veröffentlichungstag und Bekanntmachung des Hinweises auf die Patenterteilung: **15.05.2019**
(21) Anmeldenummer: 13172048.4
(22) Anmeldetag: 14.06.2013
(51) Int. Cl.: B60W 50/00, B60W 50/14, B60R 9/00, G06K 7/10, G06K 19/07

(54) **Anpassung einer Fahrzeugfunktion an Fahrzeugzubehör**
Adaptation of a vehicle function to vehicle accessories
Adaptation d'une fonction véhicule à des accessoires de véhicule

(30) Priorität: 27.06.2012 US 201213534482
(43) Veröffentlichungstag der Anmeldung: 01.01.2014
(73) Patentinhaber: Volkswagen Aktiengesellschaft, 38440 Wolfsburg (DE); AUDI AG, 85045 Ingolstadt (DE)
(72) Erfinder: Tippelhofer, Mario, San Mateo, CA California 94402 (US)

(56) Entgegenhaltungen:
- EP-A1- 2 018 981
- DE-A1-102004 055 856
- DE-A1-102010 009 760
- GB-A- 2 453 598
- JP-A- H08 282 386
- US-A1- 2009 236 825

## Beschreibung

### Gebiet der Erfindung

Die vorliegende Erfindung betrifft Verfahren und Vorrichtungen in Bezug auf die Anpassung eines Fahrzeugs auf das Vorhandensein von Fahrzeugzubehörteilen, z. B. periphere Fahrzeugzubehörteile wie einen Anhänger oder ein Fahrrad.

### Allgemeiner Stand der Technik

Fahrzeuge können mit mehreren verschiedenen Fahrzeugzubehörteilen ausgestattet sein, insbesondere periphere Fahrzeugzubehörteile, d. h. Fahrzeugzubehörteile, die mit dem Fahrzeug wie einem Pkw an einer Außenseite daran befestigt werden. Zum Beispiel kann ein Fahrradträger oder eine ähnliche Transportvorrichtung an der Rückseite des Fahrzeugs, an einer Anhängerkupplung oder einem Fahrzeugdach angebracht werden. Auch können Dachboxen auf dem Fahrzeugdach montiert werden. In anderen Fällen kann ein Anhänger an einer Anhängerkupplung des Fahrzeugs befestigt werden.

Solche peripheren Zubehörteile können das Fahrverhalten des Fahrzeugs auf unterschiedliche Art verändern. Zum Beispiel können Fahrradträger oder Dachboxen die Gesamtaußenabmessungen des Fahrzeugs erhöhen, was zu Problemen führen kann, wenn der Fahrer das Fahrzeug in eine Garage fährt oder unter einer niedrigen Brücke hindurch, was möglicherweise zu Schäden führen kann. Auch können Fahrzeugeigenschaften wie Beschleunigungsverhalten, Abbremsverhalten (Bremsen) oder Kraftstoffverbrauch verändert werden. Funktionen wie die Einparkhilfe können zu Problemen führen, weil falsche Abmessungen des Fahrzeugs zur Berechnung verwendet werden, und/oder weil die Sensoren an der Rückseite des Fahrzeugs zumindest teilweise nicht fehlerfrei arbeiten, weil zum Beispiel ein Fahrradträger an der Rückseite angebracht wurde. In anderen Situationen kann, wenn der Kofferraumdeckel des Fahrzeugs geöffnet wird, zum Beispiel manuell oder durch automatische Betätigung über eine Fernbedienung, der Deckel, wenn ein Fahrradträger befestigt wurde, gegen den Träger stoßen und Schäden verursachen. Andererseits können Dachträger oder ähnliche Transportmittel, die an der Oberseite des Fahrzeugs befestigt werden, ein Sonnendach oder Cabriodächer beim Öffnen davon beschädigen.

Daher besteht ein Bedarf nach Mitteln, um zum Beispiel einem Fahrer eines Fahrzeugs dabei zu helfen, diese Veränderungen des Fahrzeugverhaltens, die aufgrund von Fahrzeugzubehörteilen entstehen, zu bewältigen.

Aus der US 2009/0236825 A1 ist eine Vorrichtung bekannt, bei welcher ein RFID-Chip an einer Anhängerkupplung eines Anhängers befestigt ist. Dieser RFID-Chip wird zur Positionsbestimmung der Anhängerkupplung des Anhängers verwendet.

Aus der DE 10 2004 055 856 A1 ist ein Verfahren bekannt, bei welchem ein auf einem Dachgepäckträger lastendes Gewicht mit Sensoreinrichtungen, beispielsweise Dehnungsmessstreifen, gemessen wird.

Aus der GB 2453598 A ist es bekannt, eine Diebstahlwarnung auszugeben, wenn ein Empfang von Informationen unterbrochen wird.

Weiterer Stand der Technik ist aus JP H08 282386 A, DE 10 2010 009760 A1 und EP 2 018 981 A1 bekannt.

### Kurzdarstellung

Es werden ein Verfahren nach Anspruch 1, eine Vorrichtung nach Anspruch 7 sowie ein Fahrzeugzubehörteil nach Anspruch 10 bereitgestellt. Die abhängigen Ansprüche definieren weitere Ausführungsbeispiele. Gemäß einem Aspekt wird ein Verfahren bereitgestellt, das die folgenden Schritte umfasst:
Lesen von Information über ein Fahrzeugzubehörteil, die in einem Speicher gespeichert ist, der an einem Fahrzeugzubehörteil befestigt ist, und
Modifizieren einer Fahrzeugfunktion basierend auf der abgelesenen Information.

Mit anderen Worten wird gemäß diesem Aspekt Information in einem Speicher gespeichert, der an einem Fahrzeugzubehörteil befestigt ist. Durch das Lesen des Speichers können die Fahrzeugfunktionen entsprechend modifiziert werden, sodass das Vorhandensein von Zubehörteilen berücksichtigt wird oder, mit anderen Worten, das Fahrzeug auf das Vorhandensein von Zubehörteilen angepasst werden kann.

In einigen Ausführungsformen kann das Lesen das Übertragen einer Anfrage und das Empfangen der gelesenen Information, zum Beispiel drahtlos, umfassen.

Die Information kann einen oder mehrere Zubehörteiltypen umfassen, eine oder mehrere Abmessungen des Zubehörteils, ein Gewicht des Zubehörteils und Hersteller des Zubehörteils.

Das Modifizieren der Fahrzeugfunktion kann zum Beispiel das Modifizieren der Ausgabe einer Anzeige einer Audioausgabe zum Informieren eines Fahrers des Fahrzeugs über das Vorhandensein des Zubehörteils sein, kann aber alternativ oder zusätzlich auch das Modifizieren der Einparkhilfsfunktion und/oder das Modifizieren der Antriebssteuerfunktion sein, z. B., um das Fahrzeug auf einen erhöhten Kraftstoffverbrauch anzupassen.

Gemäß einer anderen Ausführungsform wird eine Steuervorrichtung für ein Fahrzeug bereitgestellt, die Folgendes umfasst:
einen Sender-Empfänger, der zum Lesen eines Speichers, der an einem Fahrzeugzubehörteil befestigt ist, konfiguriert ist; und
eine Bewertungseinheit, die zum Modifizieren einer Fahrzeugfunktion basierend auf der gelesenen Information konfiguriert ist.

Der Sender-Empfänger kann insbesondere ein drahtloser Sender-Empfänger sein. Die Information und/oder die Modifizierung der Fahrzeugfunktionen können wie bereits für den ersten Aspekt beschrieben sein.

Gemäß einem dritten Aspekt wird ein Fahrzeugzubehörteil, umfassend einen daran befestigten Speicher, bereitgestellt, wobei der Speicher Information speichert, die das Fahrzeugzubehörteil kennzeichnet. In einigen Ausführungsformen kann der Speicher ein RFID-Ettikett umfassen, das auf drahtlose Weise lesbar ist.

Die obigen Aspekte und Ausführungsformen können miteinander kombiniert werden, wenn nicht eindeutig anders zum Bilden anderer Ausführungsformen und Aspektverhältnisse angegeben.

### Kurzbeschreibung von verschiedenen Ansichten der Zeichnungen

### Kurzbeschreibung der Zeichnungen

Es zeigen:
Fig. 1 eine schematische Darstellung eines Fahrzeugs, das mit einer Steuervorrichtung gemäß einer Ausführungsform ausgestattet ist.
Fig. 2 eine Draufsicht auf das Fahrzeug aus Fig. 1 mit unterschiedlichen daran befestigen Zubehörteilen.
Fig. 3 ein Beispiel eines RFID-Chips, der in einigen Ausführungsformen verwendbar ist.
Fig. 4 ein Flussdiagramm eines Verfahrens gemäß einer Ausführungsform.
Fig. 5 schematisch eine Steuervorrichtung gemäß einer Ausführungsform.

### Ausführliche Beschreibung

Die Ausführungsformen der Erfindung werden nachstehend in Bezug auf die beiliegenden Zeichnungen ausführlich beschrieben. Es sei darauf hingewiesen, dass die Zeichnungen und die folgende Beschreibung nur aus Darstellungsgründen gegeben werden, aber nicht ausgelegt werden können, um den Umfang der vorliegenden Anmeldung einzuschränken.

Die Merkmale verschiedener Ausführungsformen, die im Folgenden beschrieben werden, können miteinander kombiniert werden, wenn nicht ausdrücklich anders angegeben, um zusätzliche Ausführungsformen zu bilden. Andererseits kann die Beschreibung einer Ausführungsform mit mehreren Merkmalen nicht ausgelegt werden, dass alle diese Merkmale für die Ausführung der vorliegenden Erfindung notwendig sind, weil andere Ausführungsformen weniger Merkmale und/oder alternative Merkmale umfassen können.

Im Folgenden wird die Anpassung eines Fahrzeugs bei Vorhandensein von Fahrzeugzubehörteilen beschrieben. Die Anpassung in dieser Hinsicht bezieht sich auf jede Handlung, die ausgeführt wird, um eine Handhabung des Fahrzeugs mit den daran befestigten Zubehörteilen für einen Fahrer des Fahrzeugs zu erleichtern. Diese Erleichterung kann zum Beispiel in der Ausgabe einer Warnung und/oder von Informationsmitteilungen an einen Fahrer bestehen, aber kann auch Maßnahmen betreffen, die das Verhalten des Fahrzeugs oder darin enthaltenen Systeme beeinflussen.

Das Fahrzeug kann jede Art von Fahrzeug sein, insbesondere ein Landfahrzeug wie ein Pkw oder Lkw. Fahrzeugzubehörteil betrifft jedes Element, das an dem Fahrzeug befestigt werden kann, z. B., um zusätzliche Merkmale oder Möglichkeiten bereitzustellen. Ein peripheres Zubehörteil ist ein Zubehörteil, das an der Außenseite eines Fahrzeugs befestigt werden kann.

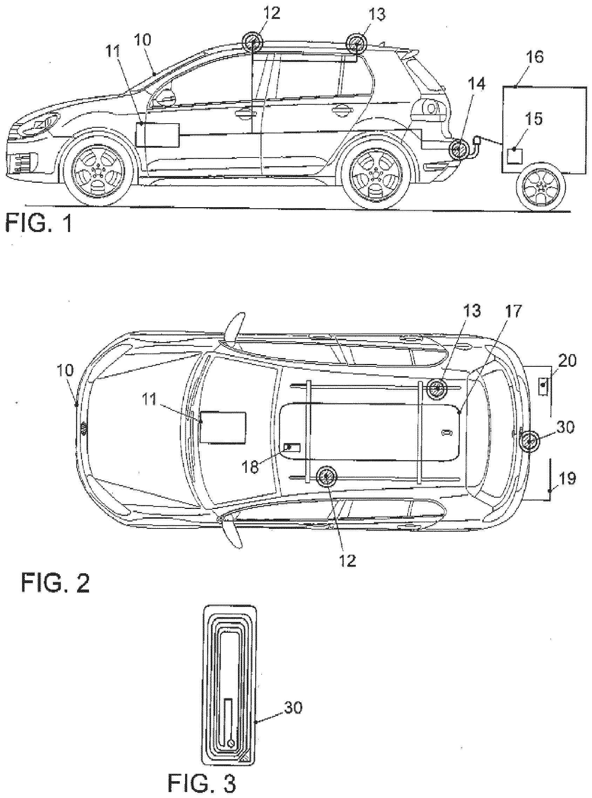

In Bezug auf die Figuren zeigt Fig. 1 eine Seitenansicht eines Fahrzeugs 10, das mit einer Vorrichtung gemäß einer dargestellten Ausführungsform ausgestattet ist. In dem Beispiel aus Fig. 1 umfasst die Vorrichtung eine Steuereinheit 11 und Sender-Empfänger 12, 13 und 14. Die Sender-Empfänger 12 und 13 sind, wie auch in der Draufsicht aus Fig. 2 gesehen werden kann, neben einer Dachreling des Fahrzeug 10 montiert, während der Sender-Empfänger 14 an der Rückseite des Fahrzeugs 10 montiert ist. Die Steuereinheit 11 ist zum Steuern der Sender-Empfänger 12, 13 und 14 zum Lesen der Speichereinheiten in den an dem Fahrzeug 10 befestigten Zubehörteilen konfiguriert. Die Steuereinheit 11 verarbeitet dann die gelesene Information und modifiziert die Fahrzeugfunktionen von Fahrzeug 10, wie ausführlicher unten erklärt wird.

Als ein Beispiel für ein Zubehörteil ist in Fig. 1 ein Anhänger 16 an einer Anhängerkupplung von Fahrzeug 10 befestigt dargestellt. Der Anhänger 16 umfasst eine Speichereinheit 15, die daran befestigt ist, die zum Beispiel von dem Sender-Empfänger 14 drahtlos gelesen werden kann. In Fig. 2, die eine Draufsicht auf das Fahrzeug 10 mit unterschiedlichen daran befestigten Zubehörteilen darstellt, ist eine Dachbox 17 an der Dachreling des Fahrzeugs 10 befestigt. Die Dachbox 17 weist eine Speichereinheit 18 auf, die daran befestigt ist, und die zum Beispiel von Sender-Empfänger 12 gelesen werden kann. Des Weiteren weist Fahrzeug 10 in Fig. 2 einen Fahrradträger 19 auf, der an der Rückseite davon befestigt ist, wobei eine Speichereinheit 20 an dem Fahrradträger 19 befestigt ist.

Es sei darauf hingewiesen, dass die in Fig. 1 und 2 dargestellten Zubehörteile lediglich als Beispiele dienen und dass andere Zubehörteile wie ein Fahrradträger, der auf dem Dach befestigt ist, z. B. an der Dachreling oder ein Skiträger, der auf dem Dach montiert ist, auch möglich sind. Auch ist die Anzahl von drei Sender-Empfängern 12, 13 und 14 rein beispielhaft und jede beliebige Anzahl von Sender-Empfängern kann verwendet werden. In einigen Fällen kann die Anzahl der verwendeten Sender-Empfänger von dem Bereich der Sender-Empfänger abhängig sein. Wenn z. B. in dem Fall einer spezifischen Umsetzung ein einzelner Sender-Empfänger ausreicht, um mit allen möglichen Zubehörteilen zu kommunizieren, die von der entsprechenden Vorrichtung zu berücksichtigen sind, kann ein einzelner Sender-Empfänger ausreichend sein. Die Anordnung der Sender-Empfänger, wie in Fig. 1 und 2 dargestellt, kann neben den Stellen eingerichtet werden, an denen typische periphere Zubehörteile montiert werden.

Die Speichereinheiten 15, 18 und 20 können in einigen Ausführungsformen RFID-Chips (Funkfrequenz-Identifizierung) sein, also passive Schaltungen, und benötigen daher keine Batterie, sondern reagieren auf passive Weise basierend auf einem von einem Sender-Empfänger empfangenen Signal, z. B. einem der Sender-Empfänger 12, 13 und 14. In anderen Ausführungsformen können jedoch aktive Speichereinheiten verwendet werden. Ein Beispiel eines gedruckten RFID-Chips 30, der in Ausführungsformen der vorliegenden Erfindung benutzt werden kann, ist in Fig. 3 dargestellt.

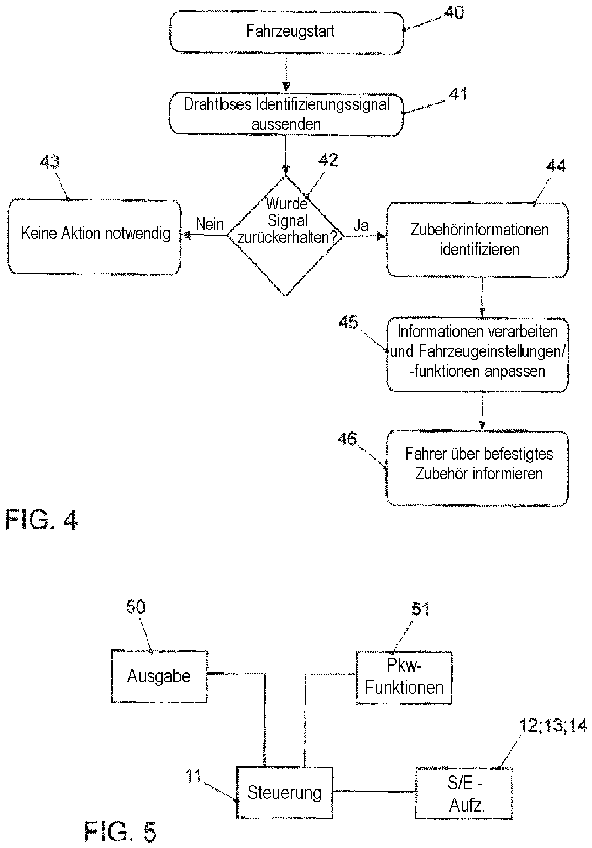

In Fig. 4 zeigt ein Flussdiagramm ein Verfahren gemäß einer dargestellten Ausführungsform. Während in Fig. 4 das Verfahren als eine Reihe von Handlungen oder Ereignissen dargestellt ist, ist darauf hinzuweisen, dass die Reihenfolge, in der die verschiedenen Handlungen und Ereignisse beschrieben werden, nicht als den Umfang der Erfindung einschränkend angesehen werden darf. In anderen Ausführungsformen kann die Reihenfolge von mindestens einigen Handlungen oder Ereignissen verändert werden, wobei manche Handlungen oder Ereignisse ausgelassen werden können und/oder einige Handlungen oder Ereignisse gleichzeitig zueinander ausgeführt werden können oder gleichzeitig mit weiteren Handlungen oder Ereignissen, die nicht in Fig. 4 dargestellt sind.

Das Verfahren von Fig. 4 kann zum Beispiel in der Vorrichtung umgesetzt werden, die in Fig. 1 und 2 dargestellt ist, zum Beispiel durch Konfigurieren von beispielsweise der Programmierung, der Steuereinheit 11 und entsprechendes Verwenden von Software, Hardware, Firmware und jede Kombination davon.

Bei 40 wird ein Fahrzeug, z. B. Fahrzeug 10 aus Fig. 1 und 2, gestartet. Dies kann auf jede herkömmliche Weise ausgeführt werden, zum Beispiel durch Drehen des Zündschlüssels oder Drücken eines Startertasters. Bei 41 wird ein drahtloses Identifizierungssignal ausgegeben, das das Vorhandensein von Speichereinheiten, die Zubehörteilen zugewiesen sind, abfragt. In einigen Ausführungsformen kann das drahtlose Identifizierungssignal ein Signal sein, das zum Ablesen von RFID-Chips ausgelegt ist.

Bei 42 wird geprüft, ob ein Signal von der Speichereinheit zurückerhalten wird. Wenn nicht, wird bei 43 bestimmt, dass keine Aktion notwendig ist, weil kein Zubehör vorhanden ist. Wenn ein Signal zurück erhalten wird, wird bei 44 die Zubehörteilinformation, die in dem empfangenen Signal enthalten ist, d. h. die in der Speichereinheit gespeicherte Information, identifiziert. In einigen Ausführungsformen umfasst diese Information eine oder mehrere physikalische Abmessungen des Zubehörteils, ein Gewicht des Zubehörteils, einen Luftwiderstandsfaktor des Zubehörteils, d. h. Information, wie das Zubehörteil den Luftwiderstand des Fahrzeugs beeinflusst, den Zubehörteiltyp (Fahrradträger, Dachbox, Anhänger...) und/oder einen Hersteller des Zubehörteils. Bei 45 werden die Information und Fahrzeugeinstellung verarbeitet und/oder die Funktionen können basierend auf der Information angepasst werden. Zum Beispiel kann das Motormanagement basierend auf dem Luftwiderstandsfaktor zum Berücksichtigen eines erhöhten Kraftstoffverbrauchs angepasst werden und zum Optimieren des Kraftstoffverbrauchs im Hinblick auf das Vorhandensein des Zubehörteils; ein Einparkhilfssystem oder ähnliche Systeme können aktualisiert werden, um die zusätzlichen Abmessungen zu berücksichtigen, Stoßdämpfer (Dämpfungen) können eingestellt werden, um das zusätzliche Gewicht zu berücksichtigen, usw. Zusätzlich oder alternativ zum Anpassen der Fahrzeugeinsteillung oder der Funktionen bei 46 kann der Fahrer über das befestigte Zubehörteil informiert werden. Zum Beispiel kann eine Warnmeldung angezeigt werden, wenn ein Zubehörteil, das die Höhe des Fahrzeugs erhöht, auf dem Dach montiert ist, sodass ein Fahrer sich darüber bewusst ist, dass das Zubehörteil während des Fahrens möglicherweise zu berücksichtigen ist.

Es sei darauf hingewiesen, dass in einigen Ausführungsformen das Verfahren aus Fig. 4 nicht nur bei Starten des Fahrzeugs, sondern auch in regelmäßigen Zeitintervallen durchgeführt werden kann, z. B. auch, wenn das Fahrzeug geparkt wird. Auf diese Weise kann z. B. ein Diebstahl eines Zubehörteils erkannt werden, wenn plötzlich ein Zubehörteil als nicht mehr vorhanden identifiziert wird. In diesem Fall kann bei 46 der Fahrer entsprechend informiert werden, z. B. durch Ausgabe eines Alarms.

Warnungen und andere Informationen bei 46 können auch in Abhängigkeit der Fahrsituation ausgegeben werden. Zum Beispiel sind viele Fahrzeuge mit Abstandswarnungen und ähnlichen Vorrichtungen ausgestattet, die einen Fahrer vor einer möglicherweise gefährlichen Situation warnen. Solche Warnungen können, wenn ein Zubehörteil identifiziert wird, zusätzliche Abmessungen des Zubehörteils in einigen Ausführungsformen berücksichtigen.

In einigen Ausführungsformen können die Verfahren und Vorrichtungen der Erfindung auch mit Einrichtungen interagieren, wie einem automatischen Garagenöffner, sodass, wenn das Garagentor geöffnet wird und ein Zubehörteil auf dem Fahrzeug erkannt wurde, eine Warnung an den Fahrer ausgegeben wird.

In Fig. 5 ist die Interaktion einer Vorrichtung gemäß einer Ausführungsform wie z. B. in Fig. 1 und 2 mit Pkw-Funktionen dargestellt. In Fig. 5 sind die Steuereinheit 11 und Sender-Empfänger 12, 13 und 14 schematisch dargestellt. Die Steuereinheit 11 interagiert mit den Pkw-Funktionen 51, z. B. Fahrhilfefunktionen, Motormangementfunktionen und auch Pkw-Funktionen, die eine Ausgabe 50 wie eine Anzeige oder Lautsprecher zum Ausführen von einer oder mehreren der verschiedenen oben beschriebenen Funktionen beinhalten.

Auf diese Weise können Pkw-Funktionen wie Motoreinstellungen, Motormanagement, Fahrhilfen auf das Vorhandensein von Zubehörteilen angepasst werden und über die Ausgabe 50 entsprechende Information und Warnungen an den Fahrer ausgegeben werden.

Wenn z. B. in einigen Ausführungsformen das Zubehörteil ein Anhänger ist, hilft verfügbare Information über Größe, Gewicht, usw. beim Anpassen bestimmter Motöreinstellungen für einen verbesserten Kraftstoffverbrauch. Ähnliche Betrachtungen gelten für größeres Zubehör wie Dachboxen, Kanus oder Fahrradträger, die den Luftwiderstand des Fahrzeugs beeinflussen und tatsächlich den Kraftstoffverbrauch erhöhen. Eine solche Anpassung der Motoreinstellungen usw. kann besonders im Fall von Elektrofahrzeugen nützlich sein, bei denen die Fahrdistanz ein wichtiges Problem darstellt.

Es sei darauf hingewiesen, dass, während die Ausführungsformen hier als drahtlos mit den Speichereinheiten kommunizierend beschrieben wurden, die mit dem Zubehörteil verbunden sind, in anderen Ausführungsformen die Kommunikation verdrahtet sein kann.

## Patentansprüche

1. Verfahren, umfassend:
Übertragen einer Anforderung nach Information von mindestens einer Speichereinheit (15; 18; 20), die an einem Fahrzeugzubehörteil (16; 17; 19) befestigt ist und welche Information über das Fahrzeugzubehörteil speichert;
Empfangen der Information von der mindestens einen Speichereinheit und
Modifizieren von Fahrzeugfunktionen (51) basierend auf der Information,
wobei das Modifizieren der Fahrzeugfunktionen das Modifizieren einer oder mehrerer Funktionen umfasst, die ausgewählt sind aus der Gruppe, bestehend aus einem Motormanagement, einer Dämpfereinstellung, einer Fahrhilfe und einem Parkassistenzsystem, und
wobei die Information mindestens eine Information aus der Gruppe, bestehend aus einer physikalischen Abmessung des Zubehörteils, Gewicht des Zubehörteils, Luftwiderstandsfaktor des Zubehörteils und Hersteller des Zubehörteils umfasst.

2. Verfahren nach Anspruch 1, ferner umfassend das Bestimmen, dass kein Fahrzeugzubehörteil (16; 17; 19) vorhanden ist, wenn keine Information empfangen wird.

3. Verfahren nach Anspruch 1 oder 2, wobei die mindestens eine Speichereinheit (15; 18; 20) ein RFID-Chip umfasst.

4. Verfahren nach einem der vorherigen Ansprüche, wobei das Modifizieren der Fahrzeugfunktionen (51) das Ausgeben von Information an einen Fahrer des Fahrzeugs (10) umfasst.

5. Verfahren nach Anspruch 4, wobei das Ausgeben von Information in Abhängigkeit von der Fahrsituation des Fahrzeugs (10) durchgeführt wird.

6. Verfahren nach einem der vorherigen Ansprüche, wobei das Modifizieren von Fahrzeugfunktionen (51) das Ausgeben einer Diebstahlwarnung umfasst, wenn zuvor Information empfangen wurde und danach nicht mehr.

7. Vorrichtung für ein Fahrzeug (10), umfassend:
einen Sender-Empfänger (12; 13; 14), der zum Abrufen von Information von einer Speichereinheit (15; 18; 20) konfiguriert ist, die an einem Fahrzeugzubehörteil (16; 17;19) befestigt ist und welche Information über das Fahrzeugzubehörteil speichert, und eine Steuereinheit (11), die zum Modifizieren von mindestens einer Fahrzeugfunktion (51) basierend auf der Information konfiguriert ist,
wobei das Modifizieren der Fahrzeugfunktionen (51) das Modifizieren einer oder mehrerer Funktionen umfasst, die ausgewählt sind aus der Gruppe, bestehend aus einem Motormanagement, einer Dämpfereinstellung, einer Fahrhilfe und einem Parkassistenzsystem, und
wobei die Information mindestens eine Information aus der Gruppe, bestehend aus einer physikalischen Abmessung des Zubehörteils (16; 17; 19), Gewicht des Zubehörteils (16; 17; 19), Luftwiderstandsfaktor des Zubehörteils und Hersteller des Zubehörteils (16; 17; 19) umfasst.

8. Vorrichtung nach Anspruch 7, wobei der Sender-Empfänger (12; 13; 14) zum Lesen von RFID-Chips konfiguriert ist.

9. Vorrichtung nach einem der Ansprüche 7 bis 8, wobei die Steuereinheit (11) zum Steuern einer Ausgabe des Fahrzeugs (10) zum Ausgeben von Informationen an einen Fahrer des Fahrzeugs (10) basierend auf der Information konfiguriert ist.

10. Fahrzeugzubehörteil, umfassend eine Speichereinheit (15; 18; 20), die Information über das Zubehörteil (16; 17; 19) speichert, wobei die Speichereinheit (15; 18; 20) von einem Sender-Empfänger (12; 13; 14) lesbar ist, und wobei die Information eine oder mehrere Informationen umfasst, die ausgewählt sind aus der Gruppe, bestehend aus einer physikalischen Abmessung des Zubehörteils (16; 17; 19), einem Gewicht des Zubehörteils (16; 17; 19), einem Luftwiderstandsfaktor des Zubehörteils (16; 17; 19) und einem Hersteller des Zubehörteils (16; 17; 19).

11. Fahrzeugzubehörteil nach Anspruch 10, wobei die Speichereinheit (15; 18; 20) einen RFID-Chip umfasst.

## Claims

1. A method, comprising:
Transmission of a request for information from at least one memory unit (15; 18; 20), which is fastened to a vehicle accessory (16; 17; 19) and which stores information about the vehicle accessory;
receipt of the information from the at least one memory unit and
modification of the vehicle functions (51) based on the information,
wherein the modification of the vehicle functions comprises the modification of one or a plurality functions, which are selected from the group, consisting of an engine management, a damper adjustment, a driving assist and a parking assist system, and
wherein the information comprises at least a piece of information from the group, consisting of a physical dimension of the accessory, weight of the accessory, air resistance factor of the accessory and manufacturer of the accessory.

2. A method according to Claim 1, furthermore comprising the determination, that no vehicle accessory (16; 17; 19) is present, if no information is received.

3. A method according to Claim 1 or 2, wherein the at least one memory unit (15; 18; 20) comprises a RFID chip.

4. A method according to any one of the preceding claims, wherein the modification of the vehicle functions (51) comprises the outputting of information to a driver of the vehicle (10).

5. A method according to Claim 4, wherein the outputting of information is carried out depending on the driving situation of the vehicle (10).

6. A method according to any one of the preceding claims, wherein the modification of vehicle functions (51) comprises the outputting of a theft warning, if information was received beforehand and subsequently no longer.

7. A device for a vehicle (10), comprising:
A transmitter-receiver (12; 13; 14), which is configured to retrieve information from a memory unit (15; 18; 20), which is fastened to a vehicle accessory (16; 17; 19) and which stores information about the vehicle accessory, and
a control unit (11), which is configured to modify at least one vehicle function (51) based on the information,
wherein the modification of the vehicle functions (51) comprises the modification of one or a plurality of functions, which are selected from the group, consisting of an engine management, a damper adjustment, a driving assist and a parking assist system, and
wherein the information comprises at least a piece of information from the group, consisting of a physical dimension of the accessory (16; 17; 19), weight of the accessory (16; 17; 19), air resistance factor of the accessory and manufacturer of the accessory (16; 17; 19).

8. A device according to Claim 7, wherein the transmitter-receiver (12; 13; 14) is configured to read RFID chips.

9. A device according to any one of Claims 7 to 8, wherein the control unit (11) is configured to control an output of the vehicle (10) for outputting information to the driver of the vehicle (10) based on the information.

10. A vehicle accessory, comprising a memory unit (15; 18; 20), which stores information about the accessory (16; 17; 19) wherein the memory unit (15; 18; 20) can be read by a transmitter-receiver (12; 13; 14), and wherein the information comprises one or a plurality of pieces of information, which are selected from the group, consisting of a physical dimension of the accessory (16; 17; 19), a weight of the accessory (16; 17; 19), an air resistance factor of the accessory (16; 17; 19) and a manufacturer of the accessory (16; 17; 19).

11. A vehicle accessory according to Claim 10, wherein the memory unit (15; 18; 20) comprises a RFID chip.

## Revendications

1. Procédé comprenant :
la transmission d'une demande d'informations provenant d'au moins une unité de mémoire (15 ; 18 ; 20), qui est fixée à une partie d'accessoire de véhicule (16 ; 17 ; 19) et qui enregistre des informations concernant la partie d'accessoire de véhicule ;
la réception des informations par l'au moins une unité de mémoire et
la modification de fonctions du véhicule (51) sur la base des informations,
la modification de fonctions du véhicule comprenant la modification d'une ou plusieurs fonctions sélectionnées dans le groupe constitué d'une gestion du moteur, d'un réglage des amortisseurs, d'une aide à la conduite et d'un système d'assistance de stationnement et
les informations comprenant au moins une information incluse dans le groupe constitué d'une dimension physique de la partie d'accessoire, du poids de la partie d'accessoire, du facteur de résistance à l'air de la partie d'accessoire et du fabricant de la partie d'accessoire.

2. Procédé selon la revendication 1, comprenant en outre la détermination qu'aucune partie d'accessoire de véhicule (16 ; 17 ; 19) n'est présente lorsqu'aucune information n'est reçue.

3. Procédé selon la revendication 1 ou 2, l'au moins une unité de mémoire (15 ; 18 ; 20) comprenant une puce RFID.

4. Procédé selon l'une des revendications précédentes, la modification des fonctions du véhicule (51) comprenant l'envoi d'informations à un conducteur du véhicule (10).

5. Procédé selon la revendication 4, l'envoi d'informations étant effectué en fonction de la situation de conduite du véhicule (10).

6. Procédé selon l'une des revendications précédentes, la modification de fonctions du véhicule (51) comprenant l'envoi d'une alerte anti-vol lorsque des informations sont reçues puis plus aucune information n'est reçue.

7. Dispositif pour un véhicule (10), comprenant :
un émetteur-récepteur (12 ; 13 ; 14) qui est conçu pour l'appel d'informations provenant d'une unité de mémoire (15 ; 18 ; 20), qui est fixée à une partie d'accessoire de véhicule (16 ; 17 ; 19) et qui enregistre des informations concernant la partie d'accessoire du véhicule, et une unité de commande (11) qui est conçue pour la modification d'au moins une fonction du véhicule (51) sur la base de ces informations,
la modification des fonctions du véhicule (51) comprenant la modification d'une ou plusieurs fonctions sélectionnées dans le groupe constitué d'une gestion du moteur, d'un réglage des amortisseurs, d'une aide à la conduite et d'un système d'assistance de stationnement et
les informations comprenant au moins une information incluse dans le groupe constitué d'une dimension physique de la partie d'accessoire (16 ; 17 ; 19), du poids de la partie d'accessoire (16 ; 17 ; 19), du facteur de résistance à l'air de la partie d'accessoire et du fabricant de la partie d'accessoire (16 ; 17 ; 19).

8. Dispositif selon la revendication 7, l'émetteur-récepteur (12 ; 13 ; 14) étant conçu pour la lecture de puces RFID.

9. Dispositif selon l'une des revendications 7 à 8, l'unité de commande (11) étant conçue pour le contrôle d'une sortie du véhicule (10) pour l'envoi d'informations à un conducteur du véhicule (10) sur la base des informations.

10. Partie d'accessoire de véhicule comprenant une unité de mémoire (15 ; 18 ; 20) qui enregistre des informations concernant la partie d'accessoire (16 ; 17 ; 19), l'unité de mémoire (15 ; 18 ; 20) pouvant être lue par un émetteur-récepteur (12 ; 13 ; 14) et les informations comprenant une ou plusieurs informations incluses dans le groupe constitué d'une dimension physique de la partie d'accessoire (16 ; 17 ; 19), du poids de la partie d'accessoire (16 ; 17 ; 19), du facteur de résistance à l'air de la partie d'accessoire (16 ; 17 ; 19) et du fabricant de la partie d'accessoire (16 ; 17 ; 19).

11. Partie d'accessoire de véhicule selon la revendication 10, l'unité de mémoire (15 ; 18 ; 20) comprenant une puce RFID.
